# EUROPÄISCHE PATENTSCHRIFT

(11) **EP 0 309 825 B1**
(45) Veröffentlichungstag und Bekanntmachung des Hinweises auf die Patenterteilung: **22.12.1993**
(21) Anmeldenummer: 88115176.5
(22) Anmeldetag: 16.09.1988
(51) Int. Cl.: H01S 3/03, H01S 3/08, H01S 3/097

(54) **Gaslaser, insbesondere Hochleistungslaser**
Gas laser, especially a high power laser
Laser à gaz, notamment laser à haute puissance

(30) Priorität: 24.09.1987 DE 3732172
(43) Veröffentlichungstag der Anmeldung: 05.04.1989
(73) Patentinhaber: Deutsche Forschungsanstalt für Luft- und Raumfahrt e.V., 51126 Köln (DE)
(72) Erfinder: Adolf, Giesen, Dr. rer. nat., D-7253 Renningen 1 (DE); Schock, Wolfram, Dr.-Ing., D-7030 Böblingen (DE); Gehringer, Erwin, D-7030 Böblingen 4 (DE)
(74) Vertreter: Hoeger, Stellrecht & Partner

(56) Entgegenhaltungen:
- EP-A- 0 052 714
- CH-A- 658 754
- US-A- 4 260 958
- US-A- 4 481 634
- US-A- 4 555 787

## Beschreibung

Die Erfindung betrifft einen hochfrequenzangeregten Laser, insbesondere einen Hochleistungslaser, mit einem einen einstückigen Rahmen aufweisenden Resonator, umfassend zwei einander gegenüberliegend angeordnete Querträger für Resonatorspiegel sowie die Querträger parallel und im Abstand voneinander haltende Längsträger, mit einander gegenüber liegende, offene Seiten des Rahmens verschließende Deckeln, welche ein Gehäuse für eine Entladungszone bilden und jeweils eine Elektrode tragen.

Derartige Laser sind beispielsweise aus der CH-A5-658 754 bekannt.

In der US-A-4,481,634 ist ein Laser offenbart, bei welchem ein Gehäuse metallische Seitenwände, einen metallischen Boden und einen Deckel aus Keramik aufweist, wobei Boden und Deckel die Elektroden tragen.

Der Erfindung liegt ausgehend von der CH-A5-658 754 die Aufgabe zugrunde, einen hochfrequenzangeregten Laser der gattungsgemäßen Art derart zu verbessern, daß er eine möglichst geringe Hochfrequenzabstrahlung aufweist.

Diese Aufgabe wird bei einem hochfrequenzangeregten Laser der eingangs beschriebenen Art erfindungsgemäß dadurch gelöst, daß auf jeweils voneinander abgewandten Außenseiten der Deckel jeweils eine zumindest die Elektroden im wesentlichen übergreifende Abschirmung vorgesehen ist und daß der Rahmen einen Teil der Abschirmung bildet.

Der Kern der Erfindung ist somit darin zu sehen, daß die Elektroden mit einer Abschirmung überdeckt werden und außerdem der Rahmen noch neben seiner Funktion als Träger für die Resonatorspiegel und Trägerkonstruktion für den die Entladungszone einschließenden Deckel auch noch gleichzeitig als Abschirmung dient, so daß der erfindungsgemäße hochfrequenzangeregte Laser zu allen anderen Vorteilen auch noch eine äußerst kompakte Konstruktion darstellt.

Im Rahmen der erfindungsgemäßen Lösung kann der Rahmen hierzu entweder selbst aus Metall hergestellt sein oder aus dielektrischem Material mit einem metallischen Überzug.

Da bei der erfindungsgemäßen Konstruktion der Rahmen mittels der Deckel auch gleichzeitig noch Träger für die Elektroden ist, sind auch für diese keine separaten Abstützungen erforderlich. In der Regel trägt jeder Deckel eine sich längs der in dem jeweiligen Strömungskanal angeordneten Entladungszone erstreckende Elektrode. Um bei dem erfindungsgemäßen Laser eine möglichst effektive Einkopplung zu erreichen, ist es vorteilhaft, wenn die von dem einen Deckel getragene erste Elektrode mit einem Innenleiter und die von dem anderen Deckel getragene zweite Elektrode mit einem Außenleiter einer koaxialen Stromzuleitung verbunden sind.

Im Rahmen der erfindungsgemäßen Lösung mit einer Abschirmung ist vorteilhafterweise der Außenleiter mit der Abschirmung verbunden.

Eine möglichst symmetrische Stromzuführung verringert einerseits die HF-Abstrahlung und verbessert andererseits die Ankopplung der Elektroden, so daß daher vorgesehen ist, daß die koaxiale Stromzuleitung mit dem Innenleiter mittig auf die erste Elektrode zugeführt ist, so daß sich letztere symmetrisch zu dem Innenleiter erstreckt.

In Ergänzung hierzu ist es ebenfalls zweckmäßig, wenn der Außenleiter über die Abschirmung der ersten Elektrode und die Abschirmung der zweiten Elektrode mit der letzteren verbunden ist, so daß die Stromableitung von der zweiten Elektrode über die Abschirmung zu dem Außenleiter erfolgt und damit eine Abstrahlung von Hochfrequenz weitgehend unterbunden ist.

Wenn der Rahmen selbst als Teil der Abschirmung dient, ist es weiterhin von Vorteil, wenn der Rahmen einen über den die erste Elektrode tragenden Deckel auf seiner Außenseite überstehenden Randbereich aufweist, der eine im Abstand von dem Deckel angeordnete Abdeckung trägt, die mit dem Randbereich die Abschirmung bildet.

Ferner ist es weiterhin von Vorteil, wenn der Rahmen einen über den die zweite Elektrode tragenden Deckel auf seiner Außenseite überstehenden Randbereich aufweist, der eine im Abstand von dem Deckel angeordnete Abdeckung trägt, die mit dem Randbereich eine Abschirmung bildet. In beiden Fällen kann die Abdeckung selbst aus Metall oder aus einem mit einem metallischen Überzug versehenen Material hergestellt sein.

Außerdem können die Abdeckungen mit dem Rahmen fest verbunden werden, so daß sich mit diesen Abdeckungen noch eine weitere Stabilisierung des die Resonatorspiegel tragenden Rahmens erreichen läßt.

Die Hochfrequenzeinkopplung auf die Elektroden läßt sich besonders verlustfrei und effektiv dadurch gestalten, daß die Abschirmungen der ersten und zweiten Elektroden symmetrisch ausgebildet sind, das heißt, daß die Randbereiche und die Abdeckungen dieselben Abmessungen aufweisen und daher eine symmetrische Hochfrequenzeinkopplung auf beide Elektroden erlauben, wobei vorzugsweise auch die zweite Elektrode mittig mit der ihr zugeordneten Abdeckung verbunden ist.

Zweckmäßig ist es, bei dem erfindungsgemäßen einstückigen Rahmen, wenn der Rahmen für jeden Deckel eine umlaufende Dichtfläche aufweist, welche sich durch einfache Mittel dauerhaft abdichten läßt. Diese Dichtfläche ist im einfachsten Fall parallel zu einer Fläche des Deckels angeordnet. Es ist aber auch beispielsweise möglich, diese Dichtfläche gegenüber der Fläche des Deckels geneigt auszuführen.

Bei allen umlaufenden Dichtflächen bietet es sich an, daß die Dichtfläche mit einer Ringdichtung versehen ist, auf welcher der Deckel aufliegt und damit dauerhaft und zuverlässig abgedichtet ist.

Bei Hochleistungslasern ist es in der Regel erforderlich, das Lasergas möglichst effektiv zu kühlen. Aus diesem Grund sind Hochleistungslaser als quergeströmte Laser ausgeführt, das heißt, daß der Resonator quer zu seiner optischen Achse von Lasergas durchströmt ist. Um einen derartigen quergeströmten Aufbau des erfindungsgemäßen Lasers zu ermöglichen, ist vorgesehen, daß der Rahmen im Bereich seiner Längsträger mit parallel zu dem Deckel angeordneten Durchströmungsschlitzen versehen ist, so daß das Lasergas durch den Durchströmungsschlitz eines Längsträgers strömt, den in dem Resonator integrierten Strömungskanal mit der Entladungszone parallel zu den Deckeln durchströmt und durch den Durchströmungsschlitz des gegenüberliegenden Längsträgers wieder aus dem Resonator austritt.

Damit der erfindungsgemäße Laser auch möglichst thermisch stabil arbeitet, ist der Rahmen vorzugsweise entweder aus Invar (registriertes Warenzeichen) oder Cerodur (registriertes Warenzeichen), einer Glas-Quarz-Keramik hergestellt.

Die thermische Stabilität läßt sich jedoch noch weiter verbessern, wenn der Rahmen mit Temperierkanälen durchsetzt ist, wobei sich diese vorzugsweise längs der Längsträger desselben erstrecken und von einem Temperiermittel ständig durchströmt sind.

Weitere Merkmale und Vorteile der erfindungsgemäßen Lösung sind Gegenstand der nachfolgenden Beschreibung sowie der zeichnerischen Darstellung eines Ausführungsbeispiels; in der Zeichnung zeigen:
- Fig. 1: eine schematische perspektivische Darstellung eines Ausführungsbeispiels;
- Fig. 2: eine perspektivische Darstellung des erfindungsgemäßen Rahmens;
- Fig. 3: einen Schnitt längs Linie 3-3 in Fig. 1;
- Fig. 4: einen Schnitt längs Linie 4-4 in Fig. 1;
- Fig. 5: einen Schnitt längs Linie 5-5 in Fig. 3 und
- Fig. 6: einen Schnitt ähnlich Fig. 5 einer Variante einer Elektrode.

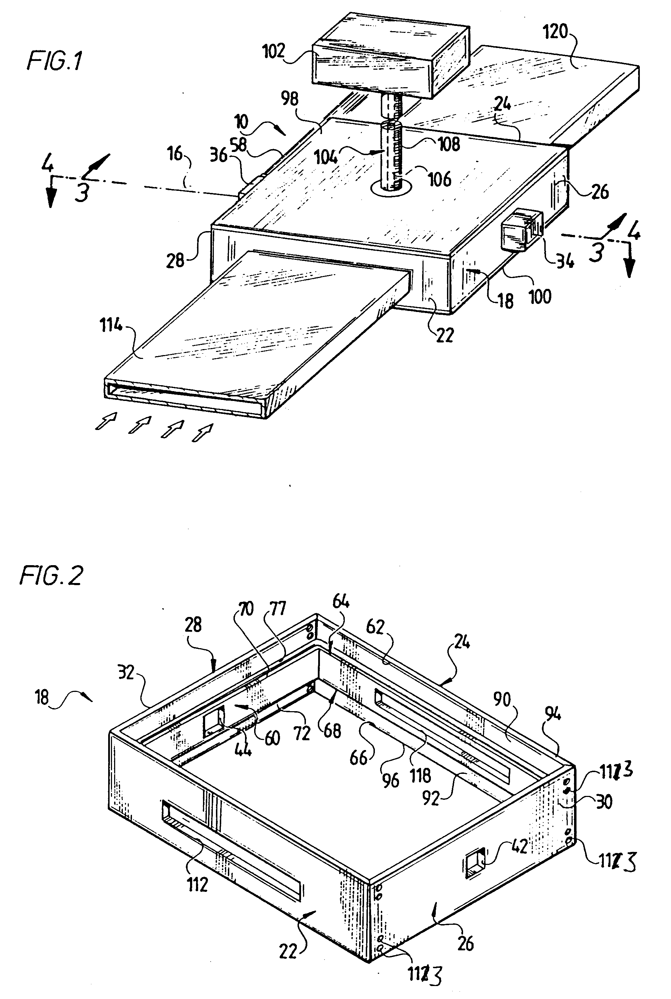

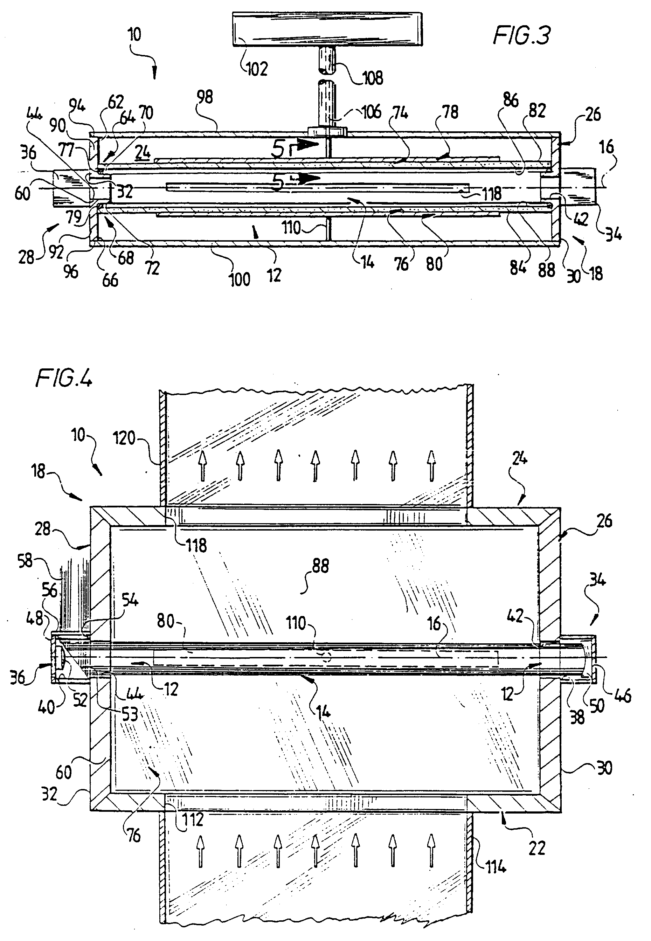

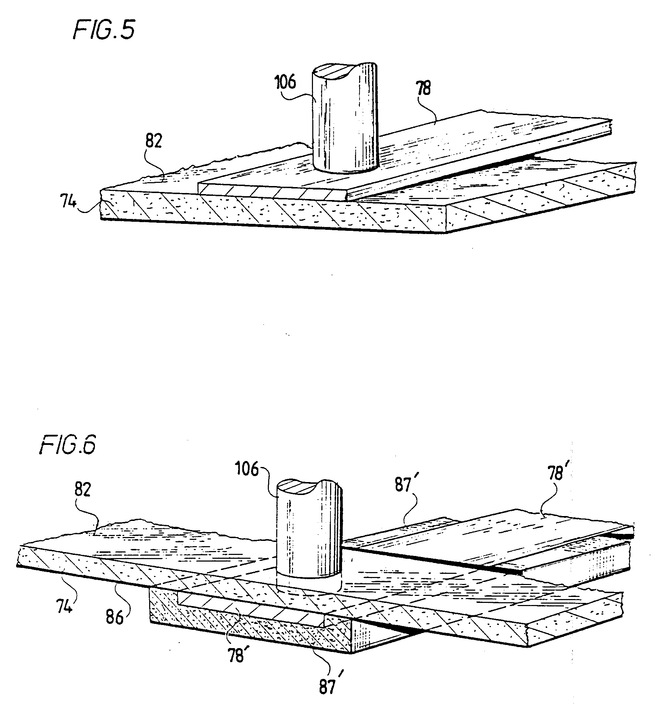

Fig. 1 zeigt ein Ausführungsbeispiel eines erfindungsgemäßen Lasers, insbesondere eines hochfrequenzangeregten Hochleistungs-CO₂-Lasers mit einem Gehäuse 10, welches einen in Fig. 4 als Ganzes mit 12 bezeichneten Laserresonator mit einer optischen Achse 16 sowie eine in Fig. 3 mit 14 bezeichnete Entladungszone umschließt.

Das Gehäuse umfaßt, wie in Fig. 2 bis 4 dargestellt, einen im wesentlichen rechteckförmigen Rahmen 18, mit zwei parallel zueinander angeordneten Längsträgern 22 und 24, welche an ihren jeweiligen Enden über Querträger 26 und 28 miteinander verbunden sind. Diese Längsträger 22, 24 und Querträger 26, 28 bilden einen einstückigen verwindungssteifen Rahmen, an welchem längs ungefähr mittig der Querträger 26 auf jeweils voneinander abgewandten Außenseiten 30 und 32 derselben Spiegelhalter 34 und 36 montiert sind. Bei diesen Spiegelhaltern 34 und 36 handelt es sich im einfachsten Fall um einen quaderförmigen, mindestens auf einer Seite mit einer Öffnung 38, 40 versehenen Kasten, welcher mit dieser eine ungefähr mittig des jeweiligen Querträgers 26 bzw. 28 angeordnete Strahlöffnung 42 bzw. 44 abdeckt. Eine parallel zu dem jeweiligen Querträger 26 bzw. 28 verlaufende Wand 46 bzw. 48 der Spiegelhalter 34 bzw. 36 trägt jeweils auf ihrer inneren, der Strahlöffnung 42 bzw. 44 zugewandten Seite einen konzentrisch zur optischen Achse 16 angeordneten Laserspiegel, wobei der an der Wand 46 gehaltene Laserspiegel ein Konkavspiegel 50 und der an der Wand 48 gehaltene Laserspiegel ein Konvexspiegel 52 ist.

Eine Auskopplung erfolgt vorzugsweise senkrecht zur optischen Achse 16 des Resonators 12 mittels eines vor dem Konvexspiegel 52 in einem Winkel von ungefähr 45° zur Resonatorachse 16 angeordneten Scraperspiegels 53, welcher den Laserstrahl 58 in Richtung einer Auskoppelöffnung 54 im Spiegelhalter 36 reflektiert, welche mit einem Fenster 56 abgedeckt ist.

Erfindungsgemäß sind die Längsträger 22 und 24 sowie die Querträger 26 und 28 des Rahmens 18 auf ihrer Innenseite mit einem im Querschnitt rechteckförmigen Wulst 60 versehen, welcher auf einer Innenseite des Rahmens 18 umläuft und damit eine zu einer oberen Öffnung 62 des Rahmens 18 hinweisende Stufe 64 sowie dieser gegenüberliegend eine zu einer unteren Öffnung 66 hin weisende Stufe 68 bildet, wobei die Stufen 64 und 68 ebenfalls auf der Innenseite des Rahmens 18 umlaufen und jeweils eine parallel zu der oberen bzw. unteren Öffnung 62 bzw. 64 verlaufende und ebenfalls auf der Innenseite des Rahmens 18 umlaufende Stufenfläche 70 bzw. 72 bilden.

Diese Stufenflächen 70 bzw. 72 bilden Anlageflächen für eine von der jeweiligen Öffnung 62 bzw. 66 einsetzbare Deckelplatte 74 bzw. 76, welche mit ihrem äußeren Rand dichtend auf den Stufenflächen 70 bzw. 72 anliegt. Zur verbesserten Abdichtung ist auf der jeweiligen Stufenfläche 70 bzw. 72 noch eine umlaufende Ringdichtung 77 bzw. 79 vorgesehen.

Der Wulst 60 wird von der optischen Achse 16 mittig geschnitten und ist in seiner Breite so ausgeführt, daß die Deckelplatten 74 bzw. 76 den Laserresonator 12 in seiner Höhe nicht einschränken. Zwischen diesen Deckelplatten 74 bzw. 76 liegt nun die bereits eingangs erwähnte Entladungszone 14.

Um eine Entladung in der Entladungszone 14 erzeugen zu können, sind die Deckelplatten 74 bzw. 76 mit jeweils einer Elektrode 78 bzw. 80 versehen, welche, wie in Fig. 5 exemplarisch dargestellt, beispielsweise eine sich parallel zur optischen Achse 16 erstreckende und auf einer der jeweils gegenüberliegenden Deckelplatte 74 bzw. 76 abgewandten Außenseite 82 bzw. 84 der jeweiligen Deckelplatte 74 bzw. 76 aufliegt. Bei einer derartigen Ausführungsform ist der jeweilige Deckel 74 bzw. 76 aus dielektrischem Material, beispielsweise Al₂O₃ hergestellt und dient aufgrund seiner elektrischen Eigenschaften dazu, eine gleichmäßige Entladung über die gesamte Länge und Breite der jeweiligen Elektrode 78 bzw. 80 herbeizuführen.

Fig. 6 zeigt eine Variante, wobei die Elektrode 78' in Form einer Leiste auf einer der jeweils gegenüberliegenden Deckelplatte 74 bzw. 76 zugewandten Innenseite 86 bzw. 88 in Form einer Leiste 78' angeordnet ist, welche ihrerseits aber, um eine gleichmäßige Entladung zu erhalten, mit einem Dielektrikum 87' abgedeckt sein muß.

Der erfindungsgemäße einstückige Rahmen 18 ist so dimensioniert, daß sich bei auf die Stufenflächen 70 bzw. 72 aufgelegten Deckelplatten 74 bzw. 76 noch jeweils ein Randbereich 90 bzw. 92 über die jeweilige Außenseite 82 bzw. 84 der jeweiligen Deckelplatte 74 bzw. 76 erhebt und über die jeweilige Deckelplatte 74 bzw. 76, wie in Fig. 3 dargestellt, nach oben bzw. nach unten übersteht, so daß ein oberer Rand 94 bzw. ein unterer Rand 96 des Rahmens 18 einen der Breite des jeweiligen Randbereichs 90 bzw. 92 entsprechenden Abstand von der Außenseite 82 bzw. 84 der jeweiligen Deckelplatte 74 bzw. 76 aufweist.

Auf dem oberen Rand 94 sowie auf dem unteren Rand 96 ist zusätzlich noch eine Abdeckung 98 bzw. 100 aufgelegt, welche in dem dargestellten Ausführungsbeispiel eine die gesamte obere bzw. untere Öffnung 62 bzw. 66 überdeckende Platte ist. Sowohl die obere Abdeckung 98 als auch die untere Abdeckung 100 als auch der Rahmen 18 sind bei dem beschriebenen Ausführungsbeispiel aus Metall hergestellt und bilden insgesamt eine Abschirmung für den zwischen den Elektroden 78 bzw. 80 fließenden hochfrequenten Strom im Bereich von 100 kHz bis 500 MHz.

Dieser hochfrequente Strom wird von einem Hochfrequenzgenerator 102 erzeugt und über eine koaxiale Stromzuführung 104 dem Gehäuse 10 derart zugeführt, daß ein Innenleiter 106 mittig auf die als erste Elektrode bezeichnete Elektrode 78 geführt und mit dieser verbunden ist, während ein Außenleiter 108 mit der Abdeckung 98 verbunden ist, welche ihrerseits wieder über den oberen Rand 94 mit dem Rahmen 18 und über den unteren Rand 96 mit der unteren Abdeckung 100 verbunden ist, von welcher ausgehend eine Verbindung 110 mittig zu der Elektrode 80 geführt ist. Somit stellt das gesamte Gehäuse 10 durch die metallische Ausführung der Abdeckungen 98 und 100 sowie des Rahmens 18 eine geschlossene abgeschirmte Kammer dar, in welcher die Elektroden 78 und 80 symmetrisch angeordnet sind, so daß die gesamte Anordnung einen keine hochfrequente Strahlung nach außen abgebenden Abschlußwiderstand der koaxialen Stromzuführung 104 darstellt.

Bei einer anderen Ausführungsform ist der Generator unmittelbar auf einer Seite, beispielsweise anstelle der Abdeckung 98 aufgesetzt, so daß die koaxiale Stromzuführung 104 entfallen kann.

Zur Temperaturstabilisierung des Lasers sind zusätzlich noch in den Querträgern 26, 28 des Rahmens 18 Temperierkanäle 113 vorgesehen, die von einem Temperiermittel, gehalten auf beispielsweise 30°C, durchströmt werden.

Bei dem dargestellten Ausführungsbeispiel handelt es sich um einen quergeströmten Laser, das heißt, daß das Lasergasgemisch, z.B. He + N₂ + CO₂, die zwischen den Deckelplatten 74 und 76 eingeschlossene Entladungszone 14 quer zur optischen Achse 16 durchströmt. Hierzu ist in dem Längsträger 22 ungefähr mittig ein diesen durchdringender Einströmschlitz 112 vorgesehen, in welchen ein Einströmkanal 114 mündet, durch welchen das Lasergemisch, wie durch die Pfeile 116 angedeutet, einem durch den Rahmen 18 und die Deckelplatten 74 und 76 gebildeten Strömungskanal mit der Entladungszone 14 zugeführt wird. Die Abführung des Lasergases aus dem Strömungskanal erfolgt über einen in dem Längsträger 24 angeordneten Ausströmschlitz 118, an welchen sich ein Abströmkanal 120 anschließt, welcher Teil eines üblichen Gasumwälzungs- und Kühlungssystems für einen derartigen Laser ist.

Durch die erfindungsgemäße Lösung wurde somit in die Resonatorkonstruktion, gebildet im wesentlichen durch den einstückigen Rahmen 18, gleichzeitig ein die Entladungszone 14 umschließender Strömungskanal für das Lasergas integriert, welcher sich durch die auf den Stufenflächen 70 bzw. 72 aufliegenden Deckelplatten 74 bzw. 76 problemlos dicht abschließen läßt, und welcher gleichzeitig noch symmetrisch an die Hochfrequenzstromzuführung 104 angekoppelt und vollständig abgeschirmt ist.

## Patentansprüche

1. Hochfrequenzangeregter Laser, insbesondere Hochleistungslaser, mit einem einen einstückigen Rahmen (18) aufweisenden Resonator (12), umfassend zwei einander gegenüberliegend angeordnete Querträger (26, 28) für Resonatorspiegel (50, 52) sowie die Querträger parallel und im Abstand voneinander haltende Langsträger (22, 24), mit einander gegenüberliegende offene Seiten (62, 66) des Rahmens verschließenden Deckeln (74, 76), welche ein Gehäuse (10) für eine Entladungszone (14) bilden und jeweils eine Elektrode (78, 80) tragen,
**dadurch gekennzeichnet**, daß auf jeweils voneinander abgewandten Außenseiten (82, 84) der Deckel (74, 76) jeweils eine Abschirmung (90, 98, 92, 100) vorgesehen ist, welche zumindest die Elektroden (78, 80) im wesentlichen übergreift, und daß der Rahmen (18) einen Teil der Abschirmung (90, 98, 92, 100) bildet.

2. Laser nach Anspruch 1, dadurch gekennzeichnet, daß die von dem einen Deckel (74) getragene erste Elektrode (78) mit einem Innenleiter (106) und die von dem anderen Deckel (76) getragene zweite Elektrode (80) mit einem Außenleiter (108) einer koaxialen Stromzuleitung (104) verbunden sind.

3. Laser nach Anspruch 2, dadurch gekennzeichnet, daß der Außenleiter (108) mit den Abschirmungen (90, 98, 92, 100) verbunden ist.

4. Laser nach einem der Ansprüche 2 oder 3, dadurch gekennzeichnet, daß die koaxiale Stromzuführung mit dem Innenleiter mittig auf die erste Elektrode (78) zugeführt ist.

5. Laser nach einem der Ansprüche 2 bis 4, dadurch gekennzeichnet, daß der Außenleiter (108) über die Abschirmung (90, 98) der ersten Elektrode (78) und die Abschirmung (92, 100) der zweiten Elektrode (80) mit der letzteren verbunden ist.

6. Laser nach einem der voranstehenden Ansprüche, dadurch gekennzeichnet, daß der Rahmen (18) einen über den die erste Elektrode (78) tragenden Deckel (74) auf seiner Außenseite (82) überstehenden Randbereich (90) aufweist, der eine im Abstand von dem Deckel (74) angeordnete Abdeckung (98) trägt, die mit dem Randbereich (90) die Abschirmung bildet.

7. Laser nach einem der voranstehenden Ansprüche, dadurch gekennzeichnet, daß der Rahmen (18) einen über den die zweite Elektrode (80) tragenden Deckel (76) auf seiner Außenseite (84) überstehenden Randbereich (92) aufweist, der eine im Abstand von dem Deckel (76) angeordnete Abdeckung (100) trägt, die mit dem Randbereich (92) die Abschirmung bildet.

8. Laser nach einem der voranstehenden Ansprüche, dadurch gekennzeichnet, daß der Rahmen (18) für jeden Deckel(74, 76) eine umlaufende Dichtfläche (70, 72) aufweist.

9. Laser nach Anspruch 8, dadurch gekennzeichnet, daß die umlaufende Dichtfläche (70, 72) in einer Ebene liegt.

10. Laser nach Anspruch 8 oder 9, dadurch gekennzeichnet, daß die Dichtfläche (70, 72) mit einer Ringdichtung (77, 79) versehen ist.

11. Laser nach einem der voranstehenden Ansprüche, dadurch gekennzeichnet, daß der Rahmen (18) im Bereich seiner Längsträger (22, 24) mit parallel zu den Deckeln (74, 76) angeordneten Durchströmungsschlitzen (112, 118) versehen ist.

12. Laser nach einem der voranstehenden Ansprüche, dadurch gekennzeichnet, daß der Rahmen (18) mit Temperierkanälen (113) durchsetzt ist.

## Claims

1. High-frequency excited laser, in particular a high power laser, having a resonator (12) with a one-piece frame (18) comprising two cross members (26, 28) arranged opposite one another for resonator mirrors (50, 52) as well as longitudinal members (22, 24) holding the cross members parallel and at a distance from one another, lids (74, 76) closing oppositely located open sides (62, 66) of the frame, said lids forming a housing (10) for a discharge zone (14) and each bearing an electrode (78, 80), characterized in that a screen (90, 98, 92, 100) is provided on each of the outer sides (82, 84) of the lids (74, 76) remote from one another, said screen essentially overlapping at least the electrodes (78, 80), and that the frame (18) forms part of the screen (90, 98, 92, 100).

2. Laser as defined in claim 1, characterized in that the first electrode (78) borne by the one lid (74) is connected to an inner conductor (106) and the second electrode (80) borne by the other lid (76) to an outer conductor (108) of a coaxial current supply line (104).

3. Laser as defined in claim 2, characterized in that the outer conductor (108) is connected to the screens (90, 98, 92, 100).

4. Laser as defined in either of claims 2 or 3, characterized in that the coaxial current supply is fed by the inner conductor centrally onto the first electrode (78).

5. Laser as defined in any of claims 2 to 4, characterized in that the outer conductor (108) is connected with the second electrode (80) via the screen (90, 98) of the first electrode (78) and the screen (92, 100) of the second electrode (80).

6. Laser as defined in any of the preceding claims, characterized in that the frame (18) has a side region (90) protruding beyond the lid (74) bearing the first electrode (78) on its outer side (82), said region bearing a cover (98) arranged at a distance from the lid (74) and forming the screen with the side region (90).

7. Laser as defined in any of the preceding claims, characterized in that the frame (18) has a side region (92) protruding beyond the lid (76) bearing the second electrode (80) on its outer side (84), said region bearing a cover (100) arranged at a distance from the lid (76) and forming the screen with the side region (92).

8. Laser as defined in any of the preceding claims, characterized in that the frame (18) has a circumferential sealing surface (70, 72) for each lid (74, 76).

9. Laser as defined in claim 8, characterized in that the circumferential sealing surface (70, 72) is located in a plane.

10. Laser as defined in claim 8 or 9, characterized in that the sealing surface (70, 72) is provided with an annular seal (77, 79).

11. Laser as defined in any of the preceding claims, characterized in that the frame (18) is provided in the region of its longitudinal members (22, 24) with flow-through slits (112, 118) arranged parallel to the lids (74, 76).

12. Laser as defined in any of the preceding claims, characterized in that the frame (18) is penetrated by attemperating channels (113).

## Revendications

1. Laser excite par haute fréquence, en particulier laser à haute puissance présentant un résonateur (12) muni d'un cadre monobloc (18) comprenant deux supports transversaux (26, 28) disposés en vis-à-vis et destinés à des miroirs (50, 52) du résonateur, ainsi que des supports longitudinaux (22, 24) maintenant les supports transversaux parallèles et distants l'un de l'autre, et des couvercles (74, 76) qui sont situés à l'opposé l'un de l'autre, obturent des côtés ouverts (62, 66) du cadre, forment un boitier (10) pour une zone de décharge (14), et portent respectivement une électrode (78, 80),
caractérisé par le fait qu'il est respectivement prévu, sur des faces externes (82, 84) des couvercles (74, 76) respectivement tournées à l opposé l'une de l'autre, un blindage (90, 98, 92, 100) qui coiffe au moins pour l'essentiel les électrodes (78, 80) ; et par le fait que le cadre (18) forme une partie du blindage (90, 98, 92, 100).

2. Laser selon la revendication 1, caractérisé par le fait que la première électrode (78) portée par l'un (74) des couvercles et la seconde électrode (80) portée par l'autre couvercle (76) sont raccordées, respectivement, à un conducteur interne (106) et à un conducteur externe (108) d'une arrivée coaxiale de courant (104).

3. Laser selon la revendication 2, caractérisé par le fait que le conducteur externe (108) est connecté aux blindages (90, 98, 92, 100).

4. Laser selon l'une des revendications 2 ou 3, caractérisé par le fait que l'arrivée coaxiale de courant est amenée centralement sur la première électrode (78), par le conducteur interne.

5. Laser selon l'une des revendications 2 à 4, caractérisé par le fait que le conducteur externe (108) est connecté à la seconde électrode (80) par l'intermédiaire du blindage (90, 98) de la première électrode (78) et du blindage (92, 100) de ladite seconde électrode.

6. Laser selon l'une des revendications précédentes, caractérisé par le fait que le cadre (18) comporte une région marginale (90) qui fait saillie au-delà du couvercle (74) portant la première électrode (78), sur sa face externe (82), et qui porte une coiffe (98) agencée à distance du couvercle (74) et formant le blindage avec la région marginale (90).

7. Laser selon l'une des revendications précédentes, caractérisé par le fait que le cadre (18) comporte une région marginale (92) qui fait saillie au-delà du couvercle (76) portant la seconde électrode (80), sur sa face externe (84), et qui porte une coiffe (100) agencée à distance du couvercle (76) et formant le blindage avec la région marginale (92).

8. Laser selon l'une des revendications précédentes, caractérisé par le fait que le cadre (18) présente une surface périphérique d'étanchement (70, 72) pour chaque couvercle (74, 76).

9. Laser selon la revendication 8, caractérisé par le fait que la surface périphérique d'étanchement (70, 72) est située dans un plan.

10. Laser selon la revendication 8 ou 9, caractérisé par le fait que la surface d'étanchement (70, 72) est pourvue d'une garniture annulaire d'étanchement (77, 79).

11. Laser selon l'une des revendications précédentes, caractérisé par le fait que le cadre (18) est muni, dans la région de ses supports longitudinaux (22, 24), de fentes de circulation (112, 118) ménagées parallèlement aux couvercles (74, 76).

12. Laser selon l'une des revendications précédentes, caractérisé par le fait que le cadre (18) est traversé par des canaux (113) d'équilibrage thermique.
